Europäisches Patentamt

European Patent Office

Office européen des brevets

(19)

(11) Publication number: **0 626 766 A2**

# EUROPEAN PATENT APPLICATION

(12)

(21) Application number: **94108034.3**

(22) Date of filing: **25.05.94**

(51) Int. Cl.⁵: **H04B 1/52**, H04L 27/00

(30) Priority: **26.05.93 JP 124180/93**

(43) Date of publication of application:
**30.11.94 Bulletin 94/48**

(84) Designated Contracting States:
**FR**

(71) Applicant: **Hitachi Maxell Ltd.**
**1-88, Ushitora-1-chome,**
**Ibaraki-shi**
**Osaka-fu (JP)**

(72) Inventor: **Hiyoshi, Yuichiro**
**Keimeiryo,**
**2-1, Matsumaedai-4-chome,**
**Moriyamachi**
**Kitasoma-gun, Ibaraki-ken (JP)**

(74) Representative: **Casalonga, Axel et al**
**BUREAU D.A. CASALONGA - JOSSE**
**Morassistrasse 8**
**D-80469 München (DE)**

(54) **Hybrid circuit and data communication apparatus.**

(57) The balancing bridge circuit (11) is provided between a four-wire circuit and a two-wire circuit, to provide a thin-type balancing bridge circuit having satisfactory transmission characteristics and a MODEM having this balancing bridge circuit built therein. The transmitting terminals (E, F) of the four-wire circuit and the connection points (A, C) of the balancing bridge circuit are connected together through the photo-coupler (12). The receiving terminals (G, H) of the four-wire circuit and the connection points (B, D) of the balancing bridge circuit are connected together through the photo-coupler (13). The terminals (J, K) of the two-wire circuit are connected to the connection points (C, D) of the balancing bridge circuit. By the presence of the compact photo-couplers (12, 13), it is possible to ground the transmitting terminal (F) and the receiving terminal (H) together. Common-mode noise reaching the terminals (J, K) is not transmitted to the receiving terminals (G, F).

FIG. I

BACKGROUND OF THE INVENTION

The present invention relates to a hybrid circuit for carrying out a four-wire to two-wire conversion of a channel and a data communication unit such as a MODEM for incorporating the hybrid circuit, and relates to a MODEM front end unit having a unit for insulating between terminals of a four-wire circuit and a two-wire circuit respectively and a data communication unit.

In order to carry out a data communication through a public circuit switching network, it is necessary to have a MODEM, and it is further necessary to have a hybrid circuit for carrying out a four-wire to two-wire conversion of the channel.

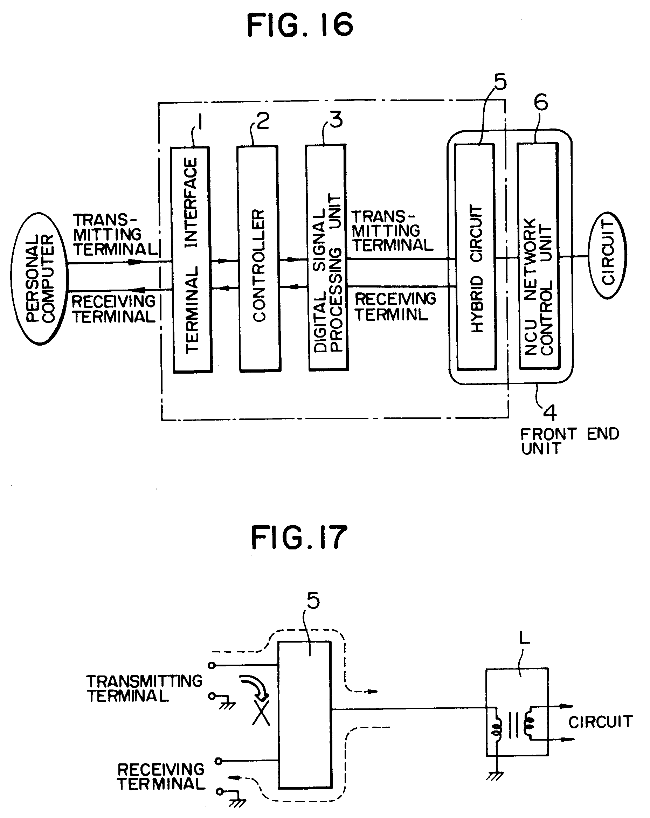

U.S. Patent No. 3,955,051 or "CMOS Integrated Circuit Data Book, JANUARY 1992", pp. 200 - 201 teaches a hybrid circuit. None of these conventional hybrid circuits provides an isolation between the four-wire circuit and the two-wire circuit, and therefore, these hybrid circuits can not be connected to the public circuit in this state. In order to overcome this difficulty, a line transformer L has been provided with the conventional hybrid circuit 5 in the front end unit 4 to make it possible to carry out a data communication, while providing an isolation between the circuits, as shown in Fig. 17. However, there is a tendency that a line transformer for data transmission with better transmission characteristics requires a larger external size. Therefore, in order to obtain practically satisfactory transmission characteristics for a transformer having an inductance of about one Henry and an isolation breakdown voltage of about 1000 V for a circuit current, at least one centimeter thickness of the line transformer is required, so that there has been a limit to a further compact and thinner size of the front end unit 4. Accordingly, in order to pursue a further compactness and a thinner size for the front end unit 4, it is essential to develop a circuit structure which enables a data transmission while obtaining an isolation between the circuits, without using a line transformer or the like. The insulation breakdown voltage of a front end circuit using a capacitor instead of a transformer will be about 250 V.

Further, there has been known a conventional four-wire to two-wire conversion hybrid circuit including an operational amplifier for taking balance to prevent a transmission signal from being leaked to receiving terminals, and providing isolation between the bridge circuit and the transmitting terminals and between the bridge circuit and the receiving terminals respectively. As a known example of this type of hybrid circuit, there is Japanese Patent Unexamined Publication No. JP-A-4-223622.

Further, there has been known a conventional circuit controller for a facsimile device including a pulse modulation circuit and an opto-coupler or photo-coupler for sending pulse signals. As a known example of this type, there is Japanese Patent Unexamined Publication No. JP-A-3-32147.

According to the above-described conventional MODEM front end unit using a balancing resistance bridge circuit, transmitting terminals (transmitter output terminals) and receiving terminals (receiver input terminals), one end of which respectively is being grounded, and the bridge circuit, of which at least one set of two-set balancing points are being floated from the ground, need to be mutually isolated or insulated. It is also necessary to prevent a signal applied to the bridge circuit from the transmitting terminals from being leaked to the receiving terminals. For the above purposes, according to the conventional hybrid circuit using the bridge circuit, an operational amplifier has been used in combination, and a transmission signal has been canceled by the operational amplifier at the signal receiving side to prevent a leakage of the signal to the receiving terminals. Thus, the operational amplifier has been indispensable.

It has become clear, however, that, according to the balancing bridge hybrid circuit using the above-described operational amplifier, it is not possible to effectively remove common-mode noise coming from the two-wire circuit (noise which occurs common-mode on two lines that structure the two-wire circuit). In other words, it has become clear that when the frequency of common-mode noise is within an operating frequency band of the operational amplifier at the signal receiving side, a larger portion of the common-mode noise is canceled by the operational amplifier and the noise does not appear in the receiving terminals during this period, but when the frequency of the common-mode noise is so high as to exceed the operating frequency band of the operational amplifier, there is a problem that the intrinsic operation of the operational amplifier is not carried out and the noise appears in the receiving terminals.

SUMMARY OF THE INVENTION

As a result of various studies carried out on the above problem, it has been found in the present invention that the above problem can be eliminated by a combined use of an isolation interface device such as an optically coupled device (a photo-coupler or opto-coupler, for example) in the balancing bridge hybrid circuit.

It is, therefore, an object of the present invention to provide a hybrid circuit which eliminates the above-described problem of the prior-art technique by a combined use of an isolation interface device, such as an optically coupled device, at a four-wire circuit side of the balancing bridge hybrid circuit, to thereby make it possible to isolate the transmitting terminals and the receiving terminals at the four-wire circuit side from the bridge circuit, without using an operational amplifier, to prevent the transmission signal from being leaked to the receiving terminals, and to effectively remove common-mode noise from the two-wire circuit to the high-frequency range.

It is another object of the present invention to provide a front end unit which has satisfactory transmission characteristics in a thin structure.

In order to achieve the above-described objects, the present invention has been structured as follows.

(1) In a hybrid circuit for carrying out a four-wire to two-wire conversion of a channel, a balancing bridge circuit is provided between terminals of a four-wire circuit and terminals of a two-wire circuit, and an isolation interface device is provided between the bridge circuit and transmitting terminals of the four-wire circuit and between the bridge circuit and receiving terminals of the four-wire circuit respectively.

(2) In a hybrid circuit for carrying out a four-wire to two-wire conversion of a channel, a balancing bridge circuit is provided between terminals of a four-wire circuit and terminals of a two-wire circuit, a secondary side of a transmitting optically coupled device of the four-wire circuit is connected between balancing points at one side of the bridge circuit and a primary side of a receiving optically coupled device of the four-wire circuit is connected between balancing points at the other side of the bridge circuit, terminals of the two-wire circuit are connected between desired adjacent connection points of the bridge circuit, a primary side of the transmitting optically coupled device is connected to transmitting terminals of the four-wire circuit, and a secondary side of the receiving optically coupled device is connected to receiving terminals of the four-wire circuit.

(3) In a hybrid circuit for carrying out a four-wire to two-wire conversion of a channel, a balancing bridge circuit including two series-connected resistors or impedances and two series-connected isolation interface devices is provided between terminals of a four-wire circuit and receiving terminals of a two-wire circuit, the two isolation interface devices are connected individually to two receiving terminals of the four-wire circuit, and another isolation interface device is provided between the bridge circuit and transmitting terminals of the four-wire circuit.

(4) In a hybrid circuit for carrying out a four-wire to two-wire conversion of a channel, a balancing bridge circuit is provided between terminals of a four-wire circuit and terminals of a two-wire circuit, adjacent two sides of the bridge circuit are structured by series-connected resistors or impedances, remaining two adjacent sides of the bridge circuit are structured by primary sides of series-connected two receiving optically coupled devices, a secondary side of a transmitting optically coupled device is connected between a connection point of two resistors of the bridge circuit and a connection point of the two receiving optically coupled devices, terminals of the two-wire circuit are connected between desired adjacent connection points of the bridge circuit, a primary side of the transmitting optically coupled device is connected to transmitting terminals of the four-wire circuit, and a secondary side of the receiving optically coupled device is connected to receiving terminals of the four-wire circuit.

(5) In the hybrid circuit for carrying out a four-wire to two-wire conversion of the channel in (4) above, secondary sides of the two optically coupled devices are connected in series and a receiving output is obtained from one of the terminals and a connection point between the secondary sides.

(6) In the hybrid circuit for carrying out a four-wire to two-wire conversion of the channel in (4) above, outputs obtained from the secondary sides of the two optically coupled devices are differentially coupled to obtain a receiving output.

(7) In a hybrid circuit for carrying out a four-wire to two-wire conversion of a channel, a balancing bridge circuit is provided between terminals of a four-wire circuit and terminals of a two-wire circuit, a secondary side of a transmitting optically coupled device of the four-wire circuit is connected between balancing points at one side of the bridge circuit, primary sides of a pair of receiving optically coupled devices of a push-pull connection are connected between balancing points at the other side of the bridge circuit, terminals of the two-wire circuit are connected between desired adjacent connection points of the bridge circuit, a primary side of the transmitting optically coupled device is connected to transmitting terminals of the four-wire circuit, and a secondary side of the receiving optically coupled device is connected to receiving terminals of the four-wire circuit.

(8) In the hybrid circuit for carrying out a four-wire to two-wire conversion of the channel in (2), (4) or (7) above, at least one of the receiving optically coupled devices and the transmitting optically coupled devices is connected at its secondary side with a load circuit which operates as a constant voltage circuit when a DC flows and which also works as a constant current circuit when an AC flows.

(9) In the hybrid circuit for carrying out a four-wire to two-wire conversion of the channel in (1) or (3) above, a current detector using an optically coupled device or a Hall element, or an isolation amplifier including a transistor and a fine transformer for supplying a base current to the transistor can be used for the isolation interface device.

(10) In the hybrid circuit for carrying out a four-wire to two-wire conversion of the channel in (1) to (9) above, one side of the balancing bridge circuit is structured by the two-wire circuit. The hybrid circuit can be utilized by being built in a MODEM.

(11) In a communication unit equipped with a transmitter, a receiver and a transmitting and receiving antenna, a balancing bridge circuit is provided of which three sides or legs are structured by resistors or impedance devices and the remaining one side is structured by the transmitting and receiving antenna, the transmitter is coupled between balancing points at one side of the bridge circuit and the receiver is coupled between balancing points at the other side of the bridge circuit, and an optically coupled device is provided in the coupling portion between the bridge circuit and the transmitter or in the coupling portion between the bridge circuit and the receiver.

The operation based on the above-described structures will be explained below.

As shown in Fig. 15, transmitting terminals E and F of a four-wire circuit are connected to connection points A and C of a balancing bridge circuit, receiving terminals G and H of the four-wire bridge circuit are connected to connection points B and D of the balancing bridge circuit, and transmitting and receiving terminals J and K of a two-wire circuit are connected to the connection points C and D of the balancing bridge circuit. Then, based on the principle of the balancing bridge, signals of the transmitting terminals E and F of the four-wire circuit are transmitted to the transmitting and receiving terminals J and K of the two-wire circuit through the balancing bridge circuit and signals of the transmitting and receiving terminals J and K of the two-wire circuit are transmitted to the receiving terminals G and H of the four-wire circuit through the balancing bridge circuit. On the other hand, the signals of the transmitting terminals E and F of the four-wire circuit are canceled by the bridge circuit and these signals are not transmitted to the receiving terminals G and H of the four-wire circuit. Thus, the four-wire to two-wire conversion of the channel can be realized.

However, when this hybrid circuit is applied to a MODEM, minus side terminals F and H of the four-wire circuit are usually dropped to a common ground terminal. Therefore, if the section between the bridge circuit and the four-wire circuit is not being isolated, the section between the connection points C and D and the section between the transmitting and receiving terminals J and K are short-circuited, so that this hybrid circuit does not function as the hybrid circuit.

According to the present invention, however, a current detector using an optically coupled device (such as a photo-coupler, for example) or a Hall device, and a device like an isolation amplifier have a provision of an electrical isolation in the units connected to the primary and secondary sides of these devices, and these devices make it possible to transmit data from a unit connected to the primary side to a unit connected to the secondary side. Accordingly, when these devices are utilized for an isolation between the four-wire circuit and the two-wire circuit of the hybrid circuit and for an isolation between the transmitting terminals and the receiving terminals of the four-wire circuit, the hybrid circuit can exhibit its normal function as the hybrid circuit even if the minus side terminals F and H of the four-wire circuit are dropped to the common ground terminal.

When common-mode noise (that is, noise of the same phase and same potential for the potential of the terminal J and the potential of the terminal K to the ground) has reached the transmitting and receiving terminals J and K of the two-wire circuit, the potential of the connection point D and the potential of the connection point C are the same and the potential of the connection point D and the potential of the connection point B are the same, so that no noise occurs in the section between the receiving terminals G and H. Since no operational amplifier or the like is used in this case, it is possible to achieve a hybrid circuit which can obtain receiving signals from which common-mode noise has been removed throughout the whole frequency band including the case where an common-mode noise frequency is high.

BRIEF DESCRIPTION OF THE DRAWINGS

Fig. 1 is a circuit diagram of the hybrid circuit relating to a first embodiment of the present invention.
Fig. 2 is a circuit diagram of the hybrid circuit relating to a second embodiment of the present invention.
Fig. 3 is a circuit diagram of the hybrid circuit relating to a third embodiment of the present invention.
Fig. 4 is a circuit diagram of the MODEM relating to a fourth embodiment of the present invention.
Fig. 5 is a circuit diagram of the MODEM relating to a fifth embodiment of the present invention.
Fig. 6 is a circuit diagram of the MODEM relating to a sixth embodiment of the present invention.

Fig. 7 is a circuit diagram of the MODEM relating to a seventh embodiment of the present invention.

Figs. 8A and 8B show circuit diagram of the hybrid circuit relating to an eighth embodiment of the present invention.

Fig. 9 is a circuit diagram of the MODEM relating to a ninth embodiment of the present invention.

Fig. 10 is a circuit diagram of the FM transmitter and receiver relating to a tenth embodiment of the present invention.

Fig. 11 is a block diagram for showing a schematic structure of the MODEM relating to an eleventh embodiment of the present invention.

Fig. 12 is a diagram for explaining the operation of the signal transmitting circuit relating to a twelfth embodiment of the present invention.

Fig. 13 is a circuit diagram of the signal transmitting circuit relating to the twelfth embodiment of the present invention.

Fig. 14 is a diagram for showing the schematic view of the MODEM relating to a thirteenth embodiment of the present invention.

Fig. 15 is a diagram for explaining the operation of the present invention.

Fig. 16 is a block diagram of the MODEM of fourteenth embodiment of the present invention.

Fig. 17 is a configuration diagram of the front end portion of the MODEM that has been known conventionally.

## DESCRIPTION OF EMBODIMENTS

Embodiments of the present invention will be explained below with reference to the drawings.

First Embodiment

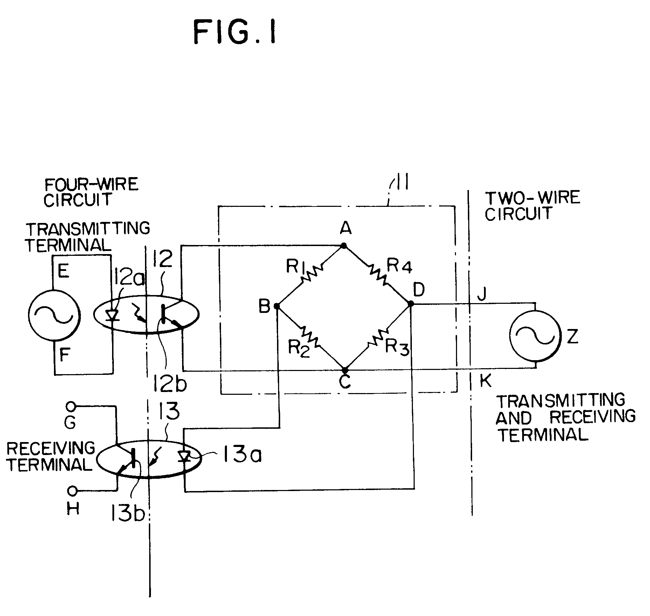

Fig. 1 shows a configuration of the hybrid circuit relating to a first embodiment of the present invention. According to the hybrid circuit of the present embodiment, as shown in Fig. 1, a balancing bridge circuit 11, including four fixed resistors $R_1$, $R_2$, $R_3$ and $R_4$, is provided between a four-wire circuit and a two-wire circuit, where one of the four resistors may be a wire impedance, connection points A and C at diagonal positions (balancing points) of the balancing bridge circuit 11 and transmitting terminals E and F of the four-wire circuit are isolated by a first photo-coupler 12, and connection points B and D at the other diagonal positions (balancing points) of the balancing bridge circuit 11 and receiving terminals G and H of the four-wire circuit are isolated by a second photo-coupler 13. Transmitting and receiving terminals J and K of the two-wire circuit are connected to the connection points C and D at the adjacent positions of the balancing bridge circuit 11. The first photo-coupler 12 includes a light emitting diode 12a and a photo-transistor 12b for receiving a light from the light emitting diode 12a, and the second photo-coupler 13 includes a light emitting diode 13a and a photo-transistor 13b for receiving a light from the light emitting diode 13a.

The operation of the hybrid circuit relating the first embodiment of the present invention will be explained.

According to the hybrid circuit of the present embodiment, when a signal has been applied between the transmitting terminals E and F of the four-wire circuit, an optical signal corresponding to the transmitted signal is transmitted from the light emitting diode 12a and an electromotive force signal corresponding to the optical signal is outputted from the photo-transistor 12b. This signal is then applied to connection points A and C of the balancing bridge circuit 11.

The voltage between the connection points C and D of the balancing bridge circuit 11 is almost equal to the voltage applied to the connection points A and C divided by the specific resistance of the bridge. Therefore, the signal applied between the transmitting terminals E and F of the four-wire circuit is transmitted to the transmitting and receiving terminals J and K of the two-wire circuit. However, since the connection points B and D have almost the same potential for the voltage applied between the connection points A and C, leakage of the signal applied between the transmitting terminals E and F of the four-wire circuit to the receiving terminals G and H is prohibited.

On the other hand, when a signal has been applied to the transmitting and receiving terminals J and K of the two-wire circuit, a potential difference occurs between the connection points B and D, because the potential of the connection point D is equal to the potential of the transmitting and receiving terminal J and the potential of the connection point B becomes almost equal to the potential of the transmitting and receiving terminal J divided by the specific resistance of the bridge. Accordingly, an optical signal corresponding to this potential difference is transmitted from the light emitting diode 13a and an electromotive force signal corresponding to this optical signal is outputted from the photo-transistor 13b, so that the signal applied to the transmitting and receiving terminals J and K of the two-wire circuit is transmitted to the receiving terminals G and H of the four-wire circuit.

Consider the case where common-mode noise (noise which is almost at the same level of noise potential for the terminal J and the terminal K to a ground point (not shown) and which changes common-mode) has reached the transmitting and receiving terminals J and K from the two-wire circuit. In this case, a voltage due to this noise does not occur between the terminals J and K, so that this common-mode noise does not occur between the ground points B and D where a partial voltage value of the voltage between the terminals J and K occurs. As a result, a hybrid circuit which is strong against common-mode noise can be obtained in a simple circuit.

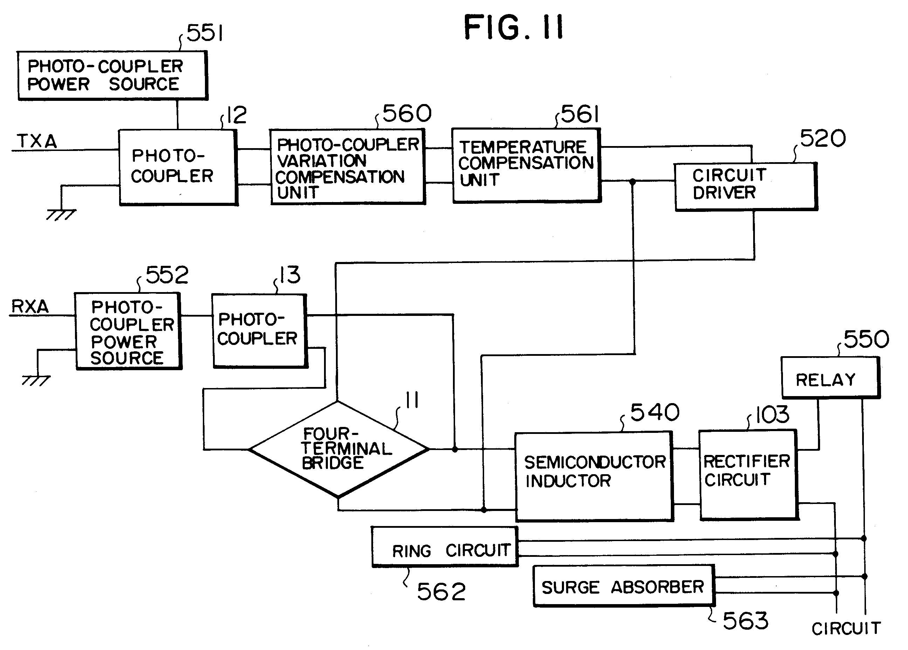

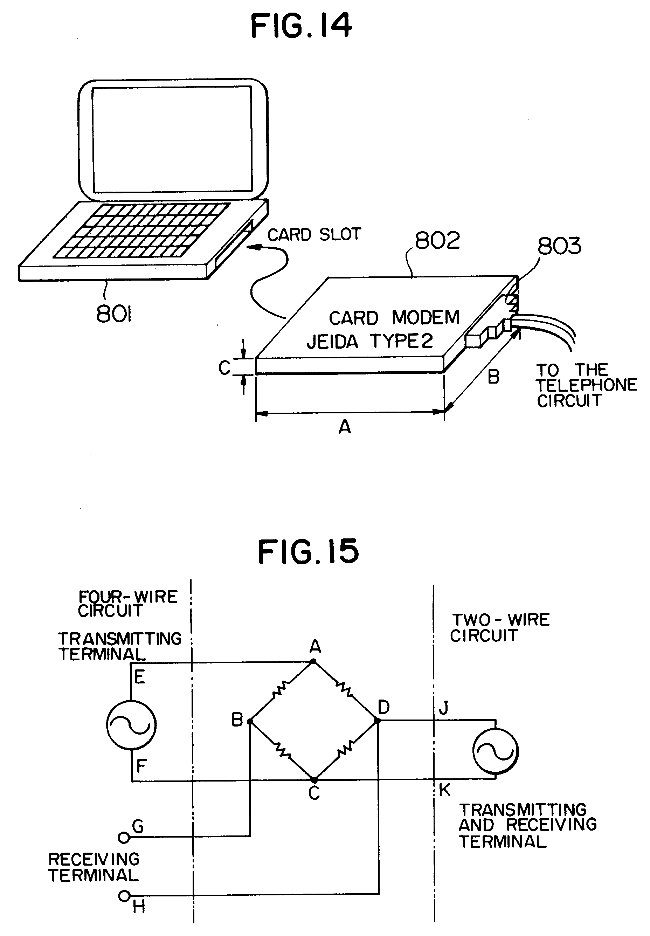

As explained above, the hybrid circuit of the present embodiment is characterized in that the balancing bridge 11 is provided between the four-wire circuit and the two-wire circuit and that the photo-couplers 12 and 13 are provided between the transmitting terminals E and F of the four-wire circuit and the connection points A and C of the balancing bridge 11 and between the receiving terminals G and H of the four-wire circuit and the connection points B and D of the balancing bridge 11 respectively. In this structure, it is possible to omit an operational amplifier which has been essential to drop in the common ground terminal the transmitting terminal and the receiving terminal of the four-wire circuit according to the hybrid circuit which uses the conventional balancing bridge. Thus, by employing an extremely simple structure using only the balancing bridge 11 and the photo-couplers 12 and 13, it is possible to achieve a four-wire to two-wire conversion of a channel, according to which, the hybrid function is not lost by the balancing bridge, a signal is not leaked from the transmitting terminals E and F of the four-wire circuit to the receiving terminals G and H, and common-mode noise which reaches from the two-wire circuit to the transmitting and receiving terminals J and K does not occur in the receiving terminals G and H, even if the transmitting terminal F and the receiving terminal H of the four-wire circuit are dropped to a common ground terminal. In this case, since no operational amplifier is used, it is possible to effectively remove common-mode noise from the whole frequency band, including noise of the high frequency band outside the operational amplifier band that has not been able to be removed by the conventional unit using the operational amplifier. Thickness of the photo-couplers used in the above embodiment is about 2 mm. This embodiment has a feature that the balancing bridge, the secondary side of the transmitting opto-coupler and the primary side of the receiving opto-coupler which are connected to the 2-wire circuit demand only the D.C. current in the 2-wire circuit, necessitating no external power supply and convenient for MODEM. Fig. 14 shows an embodiment of the communication unit using a card type MODEM including a hybrid circuit of the present invention. In Fig. 14, 801 designates a personal computer, 802 a card type MODEM and 803 a connector. The card MODEM 802 a digital unit and a PCMCIA interface in addition to the analog unit including a hybrid circuit of the embodiment (refer to Fig. 11). The MODEM 802 can be structured in a very thin type as shown in Fig. 14. Other circuits explained with the following embodiments 2 to 9 may be applied in the card type MODEM 802.

Second embodiment

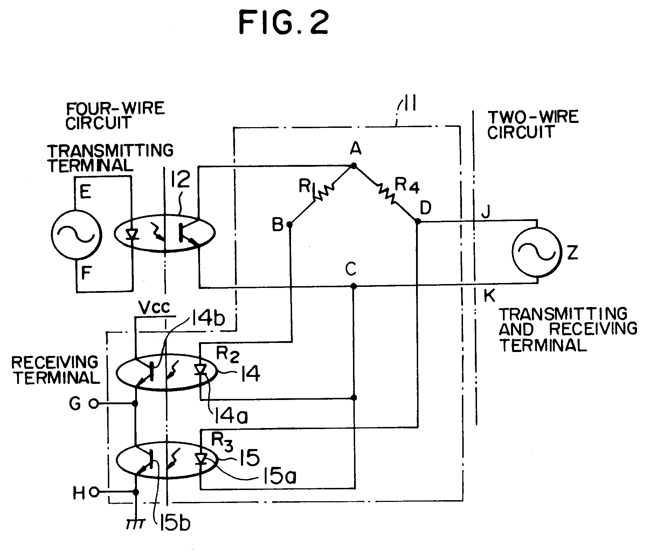

Fig. 2 shows a configuration of the hybrid circuit relating to a second embodiment of the present invention. The hybrid circuit of the present embodiment is characterized in that, as shown in Fig. 2, of the devices which structure the balancing bridge circuit 11, devices connected between the connection points B and C and devices connected between the connection points C and D are substituted by third and fourth photo-couplers 14 and 15 which prevent the leakage of signals from the transmitting terminals E and F of the four-wire circuit to the receiving terminals G and H.

The operation of the hybrid circuit relating to the second embodiment will be explained below.

When a signal has been applied between the transmitting terminals E and F of the four-wire circuit, this signal is added to the connection points A and C of the balancing bridge circuit 11 through the first photo-coupler 12 in a similar manner as described above.

The voltage between the connection points C and D of the balancing bridge circuit 11 becomes almost equal to the voltage applied to the connection points A and C divided by resistances R1 and R4 of the bridge and primary impedances of the photo-couplers 14 and 15. Therefore, the signal applied between the transmitting terminals E and F of the four-wire circuit is transmitted to the transmitting and receiving terminals J and K of the two-wire circuit. However, almost an equal current flows through the third and fourth photo-couplers 14 and 15 against the voltage applied to the connection points A and C, so that a feedthrough current according to the signal flows between voltage sources $V_{CC}$ and GND in the receiving circuit and there is no variation in the potential of the terminal G which is connected to an intermediate point between the $V_{CC}$ and GND. Therefore, a leakage of the signal applied between the transmitting terminals E and F of the four-wire circuit to the receiving terminals G and H can be prevented.

On the other hand, when a signal has been applied to the transmitting and receiving terminals J and K of the two-wire circuit, a potential difference occurs between the connection points B and D, because the potential of the connection point D is equal to the potential of the transmitting and receiving terminal J and the potential of the connection point B becomes almost equal to the potential of the transmitting and receiving terminal J divided by the resistances $R_1$ and $R_4$ of the bridge and the primary impedances of the photo-couplers 14 and 15. Accordingly, an optical signal corresponding to this potential difference is transmitted from the light emitting diodes 14a and 15a and an electromotive force signal corresponding to this optical signal is outputted from the photo-transistors 14b and 15b, so that the signal applied to the transmitting and receiving terminals J and K of the two-wire circuit is transmitted to the receiving terminals G and H of the four-wire circuit.

The hybrid circuit of the present embodiment also has a similar effect to the effect of the hybrid circuit relating to the first embodiment.

Third embodiment

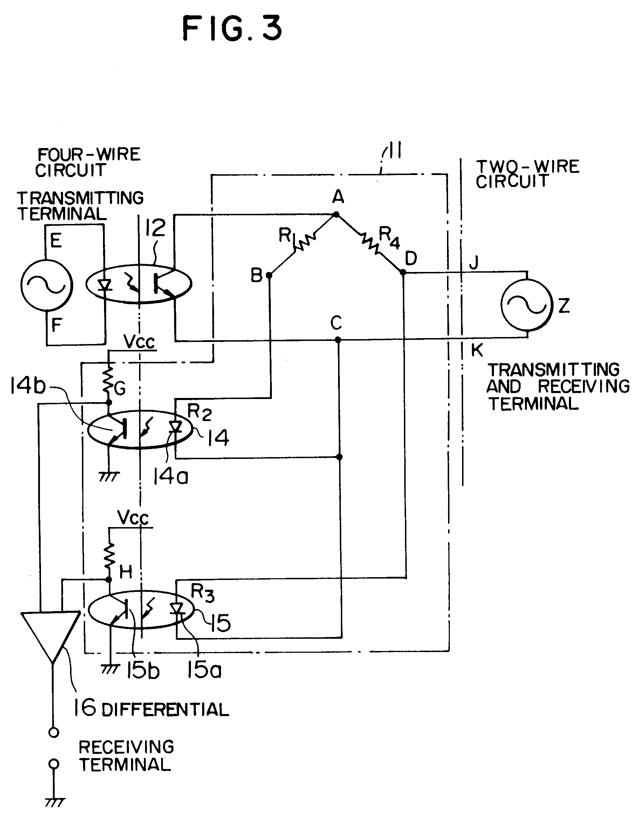

Fig. 3 shows a configuration of the hybrid circuit relating to a third embodiment of the present invention. The hybrid circuit of the present embodiment is characterized in that outputs of the secondary side photo-couplers 14b and 15b of the two photo-couplers 14 and 15 of the same characteristics connected to the receiving terminals G and H of the four-wire circuit are differentially amplified by a differential amplifier 16. Other portions have the structure similar to the structure of the second embodiment.

According to the hybrid circuit of the present embodiment, when a signal has been applied to the connection points A and C of the balancing bridge circuit 11, almost an equal level of current flows through the third and fourth photo-couplers 14 and 15. Therefore, the potential of the input terminals G and H of the differential amplifier 16 becomes almost equal, with a result that a leakage of the signal applied between the transmitting terminals E and F of the four-wire circuit to the receiving terminals G and H can be prevented. Transmission of a signal from the transmitting terminals E and F of the four-wire circuit to the two-wire circuit and transmission of a signal from the two-wire circuit to the receiving terminals of the four-wire circuit are carried out in the same manner as that of the hybrid circuit of the second embodiment, and therefore, their explanation will be omitted.

According to the hybrid circuit of the present embodiment, there is an effect similar to the effect obtained by the hybrid circuit relating to the first and second embodiments. Furthermore, there is an additional effect that a larger gain can be obtained by the receiving terminals of the four-wire circuit because the secondary side outputs of the photo-couplers 14 and 15 are differentially amplified by the differential amplifier 16 and then applied to the receiving terminals of the four-wire circuit.

Fourth embodiment

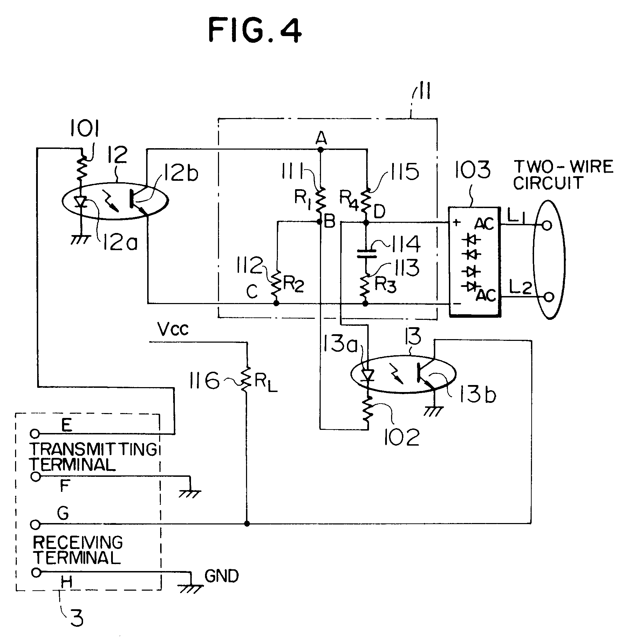

Fig. 4 shows a fourth embodiment of the present invention. The fourth embodiment to a seventh embodiment are embodiments where the hybrid circuit of the present invention is applied to a MODEM.

In Fig. 4, T designates an analog signal transmitting terminal of a digital signal processing circuit 3 for structuring a MODEM (reference Fig. 16), R an analog signal receiving terminal of the MODEM, and $L_1$ and $L_2$ two-wire circuits for structuring a telephone circuit. Symbols 101 and 102 designate resistors provided at the primary side of the photo-couplers 12 and 13, and 103 designate a diode bridge for keeping constant the polarity of a DC voltage applied to the photo-couplers 12 and 13 regardless of the polarity of a DC voltage applied to the two-wire circuits $L_1$ and $L_2$. As is clear from this diagram, the minus side terminals of the digital signal processing terminals T and R are dropped to a common ground terminal.

In the present embodiment, the balancing bridge circuit 11 for adding the hybrid function is structured by a resistor 111 (resistance value $R_1$), a resistor 112 (resistance value $R_2$), an impedance (a combined impedance $R_3$) of a resistor 113, a capacitor 114 and the two-wire circuits $L_1$ and $L_2$, and a resistor 115 (resistance value $R_4$). The secondary side 12b of the first photo-coupler 12 is connected between the connection points A and C of the balancing bridge circuit 11 and the primary side 13a of the second photo-coupler 13 is connected between the connection points B and D to secure an isolation between the terminals.

The principle of the operation of the MODEM of the present embodiment is similar to that of the hybrid circuit relating to the first embodiment, and therefore, its explanation will be omitted to avoid a duplication. According to the MODEM of the present embodiment, it is possible to prevent a leakage of the signal from the transmitting terminal T of the digital signal processing circuit to the receiving terminal R.

Fifth embodiment

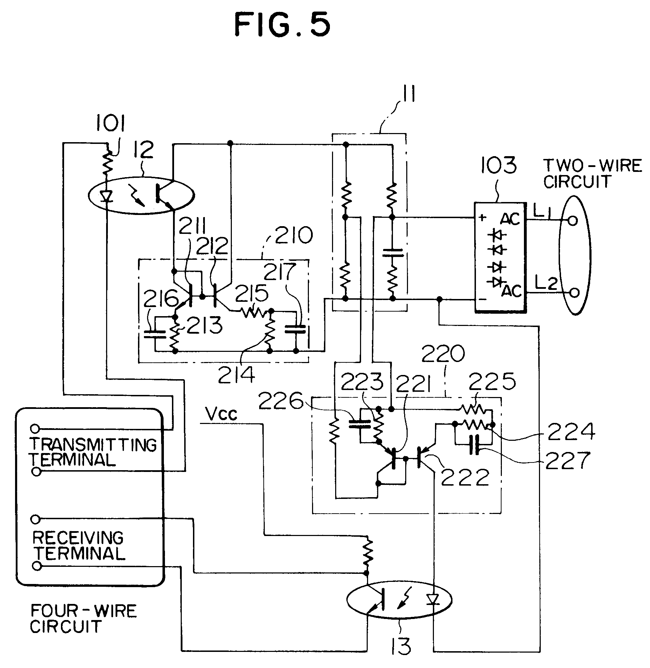

Fig. 5 shows a fifth embodiment of the present invention. Taking into consideration the fact that commercially available photo-couplers are not always sufficient enough in their transmission efficiency and allowable current, the MODEM of the present embodiment is characterized in that current amplifier circuits according to transistors have been added to the MODEM to compensate for these insufficient transmission efficiency and allowable current. In Fig. 5, symbols 210 and 220 designate current mirror circuits which are current amplifier circuits, and other portions corresponding to the same portions in Fig. 4 are designated by the same symbols.

The first current mirror circuit 210 is used for amplifying an output current of the first photo-coupler 12 connected to the transmitting terminal T of the four-wire circuit, and includes two transistors 211 and 222, three resistors 213, 214 and 215, and two capacitors 216 and 217 connected in parallel with resistors 213 and 214. The output current of the photo-coupler 12 is amplified at a scale factor according to a ratio of a combined impedance of the resistor 213 and the capacitor 216 and a combined impedance of the resistor 214 and the capacitor 217.

The second current mirror circuit 220 is used for amplifying an input current of the second photo-coupler 13 connected to the receiving terminal R of the four-wire circuit, and includes two transistors 221 and 222, three resistors 223, 224 and 225, and two capacitors 226 and 227 connected in parallel with resistors 223 and 224. The input current of the photo-coupler 13 is amplified at a scale factor according to a ratio of a combined impedance of the resistor 223 and the capacitor 226 and a combined impedance of the resistor 224 and capacitor 227.

The principle of the operation of the MODEM of the present embodiment is the same as that of the hybrid circuit relating to the first embodiment, and therefore, its explanation will be omitted to avoid a duplication. According to the MODEM of the present embodiment, it is possible to have an effect similar to the effect of the MODEM of the fourth embodiment, and it is also possible to have sufficient transmission efficiency with an effect of a stabilized transmission of a signal because the current amplifiers have been provided at the secondary side of the first photo-coupler 12 and the primary side of the second photo-coupler 13 respectively. Although current mirrors have been used as the current amplifier circuits in the present embodiment, it is needless to mention that other current amplifier circuits can also be used on their behalf.

Sixth embodiment

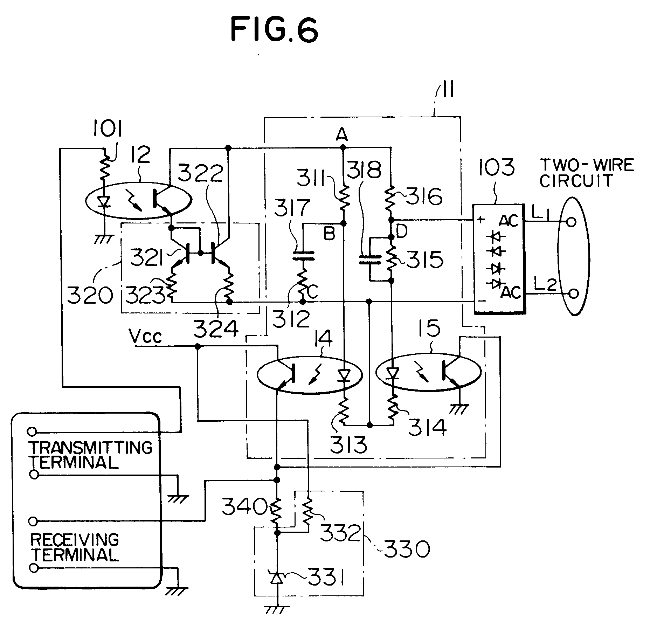

Fig. 6 shows a sixth embodiment of the present invention. The MODEM of the present embodiment is characterized in that the hybrid circuit of the second embodiment has been applied. In Fig. 6, symbol 320 designates a current mirror circuit which is a current amplifier circuit, 330 a reference voltage source, and 340 a resistor, and portions corresponding to the same portions in Figs. 2 and 4 are designated by the same symbols.

In the present embodiment, the balancing bridge circuit 11 includes a resistor 311 connected between the connection points A and B, resistors 312 and 313, a capacitor 317 and the primary side impedance of the third photo-coupler 14 connected between the connection points B and C, resistors 314 and 315, a capacitor 318 and the primary side impedance of the fourth photo-coupler connected between the connection points C and D, and a resistor 316 connected between the connection points D and A. When the resistance values of the resistors 311 to 316 are $R_1$ to $R_6$, it is possible to balance the bridge if the electrostatic capacity of the capacitors 317 and 318 is set to have sufficiently low impedance in the working frequency band by setting such that $R_1 = R_6$, $R_5 = R_1 + R_6$, $R_5 = R_4$, and $R_2 =$ the circuit impedance - (the impedance of the two-wire circuit observed from the balancing bridge circuit 11). The secondary side of the first photo-coupler 12 is connected between the connection points A and C of the balancing bridge circuit 11, the primary side of the third photo-coupler 14 is connected between the connection points B and C, and the primary side of the fourth photo-coupler 15 is connected between the connection points C and D, to isolate between the terminals.

The current mirror circuit 320 is used to amplify the output current of the photo-coupler 12 connected to the transmitting terminal T of the four-wire circuit 320, and includes two transistors 321 and 322 and two resistors 323 and 324. The output current of the photo-coupler 12 is amplified at a scale factor according to the resistor 323 and the resistor 324.

The reference voltage source 330 is structured by a Zener diode 331 and a resistor 332, and is connected to the secondary side of the photo-coupler 14 through the resistor 340.

The operation of the MODEM of the present embodiment will be explained below.

A signal applied to the transmitting terminal T of the four-wire circuit is transmitted between the connection points A and C of the balancing bridge circuit 11 through the resistor 101, the photo-coupler 12 and the current mirror circuit 320. When the impedance between the connection points C and D is $R_{CD}$ and the impedance between the connection points D and A is $R_{DA}$, this signal is transmitted to the terminals $L_1$ and $L_2$ of the two-wire circuit by being multiplied by a factor of about $R_{CD} / (R_{DA} + R_{CD})$.

On the other hand, the signal applied to the terminals $L_1$ and $L_2$ is directly transmitted between the connection points C and D of the balancing bridge circuit 11. When the impedance between the connection points B and C is $R_{BC}$, the impedance between the connection points A and B is $R_{AB}$, and the impedance between the connection points D and A is $R_{DA}$, the signal transmitted between the connection points C and D is transmitted between the connection points B and C by being multiplied by a factor of about $R_{BC} / (R_{AB} + R_{DA} + R_{BC})$. Therefore, when the signal currents flown to the secondary side of the photo-couplers 15 and 14 are $I_1$ and $I_2$ respectively, a relation of $I_1 : I_2 = 1 : \{R_{BC} / (R_{AB} + R_{DA} + R_{BC})\}$ is established, and when $I_1$ is not equal to $I_2$, a differential component of the signal current flows to the resistor 340 and a signal voltage of $| I_1 - I_2 | \times R_{340}$ is transmitted to the receiving terminal R of the four-wire circuit based on the reference voltage.

Since $I_1$ and $I_2$ become equal for the signal applied to the transmitting terminal T of the four-wire circuit, the current flowing through the photo-couplers 14 and 15 pass through the $V_{CC}$ to the earth. Accordingly, the signal current does not flow through the resistor 340, so that no signal is transmitted to the receiving terminal R of the four-wire circuit.

The MODEM of the present embodiment also has an effect similar to the effect of the MODEM in the fifth embodiment.

Seventh embodiment

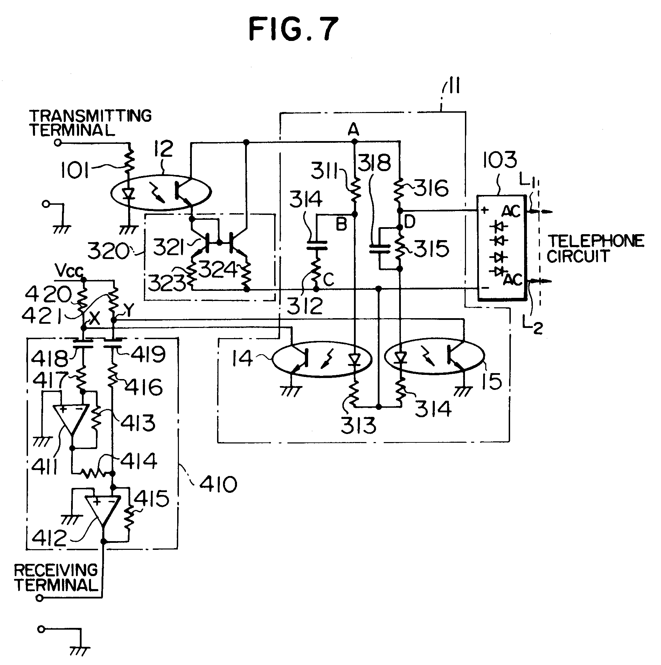

Fig. 7 shows a seventh embodiment of the present invention. The MODEM of the present embodiment is characterized in that the hybrid circuit of the third embodiment has been applied to this MODEM. In Fig. 7, symbol 410 designates a differential amplifier, and 420 and 421 designate resistors. Portions corresponding to the same portions in Fig. 6 are designated by the same symbols.

The differential amplifier 410 includes operational amplifiers 411 and 412 and resistors 413 to 417, and is used to amplify the differential component of the signal applied to the connection points X and Y. Other portions are the same as the portions of the MODEM of the sixth embodiment, and therefore their explanation will be omitted to avoid a duplication.

As explained in the sixth embodiment, a signal applied to the transmitting terminal T of the four-wire circuit is transmitted between the connection points A and C of the balancing bridge circuit 310 and is then transmitted from the connection points C and D to the terminals $L_1$ and $L_2$ of the two-wire circuit. In the mean time, a signal applied to the terminals $L_1$ and $L_2$ of the two-wire circuit is transmitted to the receiving terminal R of the four-wire circuit through the balancing bridge circuit 310. Since the currents $I_1$ and $I_2$ flowing to the connection points X and Y become almost equal for the signal applied to the transmitting terminal T of the four-wire circuit, the output of the differential amplifier 410 becomes almost zero, so that no signal is transmitted to the receiving terminal R of the four-wire circuit. Accordingly, the MODEM of the present embodiment also has an effect similar to the effect of the MODEM in the sixth embodiment.

Eighth embodiment

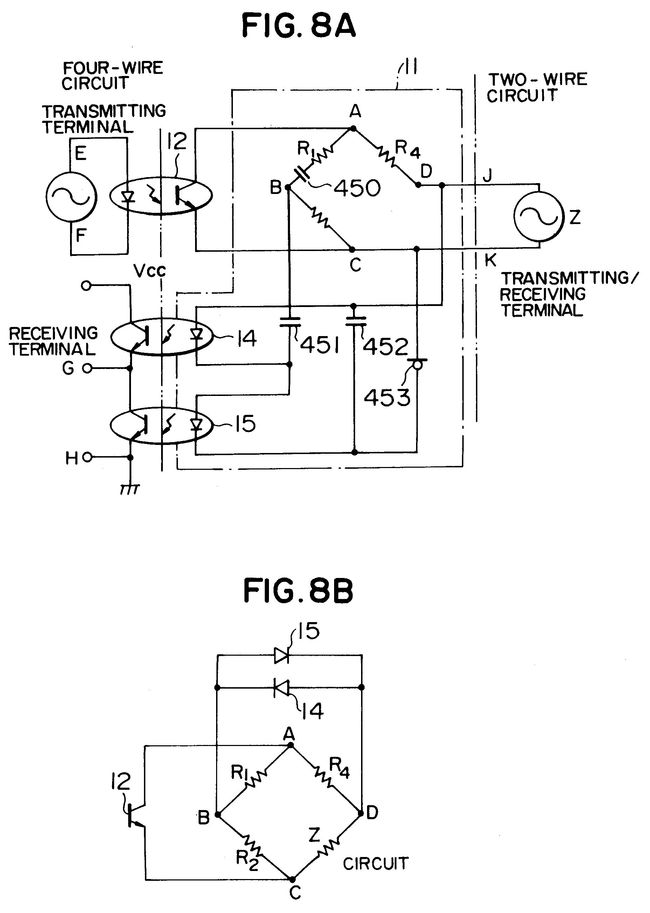

Figs. 8A and 8B show an eighth embodiment of the present invention. In the present embodiment, two sets of the transmitting or receiving photo-couplers respectively in the hybrid circuit of the first embodiment are used to make the two respective photo-couplers to carry out a so-called push-pull operation for applying signals of an equal amplitude in opposite phases. Fig. 8A shows an actual circuit and Fig. 8B shows an equivalent circuit thereof. These diagrams show the case where the receiving photo-couplers are set in a push-pull structure. In Fig. 8, 450 to 452 designate capacitors for transmitting an AC signal and interrupting a DC, 453 a constant current diode, and Z a circuit impedance. Portions corresponding to the same portions in Fig. 1 are designated by the same symbols. For the MODEM, there is, for example, ITU-T(ex CCITT)V, 22 bis as a standard for carrying out 2400 bps full duplex communication. This system uses frequencies of a ratio of one to two of 1200 Hz and 2400 Hz respectively for the carrier frequencies of the calling side MODEM and the receiving side MODEM. Therefore, this system has a problem of a secondary harmonic distortion. When a push-pull operation is carried out, even harmonics are canceled out together so that a satisfactory communication can be expected.

In Fig. 8A, the photo-coupler 14 is for receiving a plus phase, the photo-coupler 15 is for receiving a minus phase and the photo-coupler 12 is for transmission, and sufficient bias current is supplied to each of these photo-couplers to make them perform a class A operation. The photo-coupler 14 and the photo-coupler 15 are connected in series and therefore a DC bias of the same value is applied as a DC to these photo-couplers. However, since the anode of the photo-coupler 14 and the cathode of the photo-coupler 15 are connected by the capacitor 452, a signal of an inverse phase is applied as an AC to these photo-couplers.

Accordingly, when an AC voltage is applied between the terminals J and K and then an AC voltage is subsequently applied between the connections D and B, the current of the photo-coupler 14 increases and the current of the photo-coupler 15 decreases when the amplitude is deflected to the plus direction, and the current of the photo-coupler 15 increases when the amplitude deflects to the minus direction.

As explained above, when a push-pull operation is carried out, even harmonic distortions are canceled out together and gain increases by 6 dB and random noise increases by only 3 dB, with a result that the S/N ratio is improved by 3 dB. The transmitting photo-coupler 12 can also remove even harmonic distortion in a similar manner in a push-pull structure.

The present embodiment can also obtain an effect similar to the effect obtained in the first embodiment.

Ninth embodiment

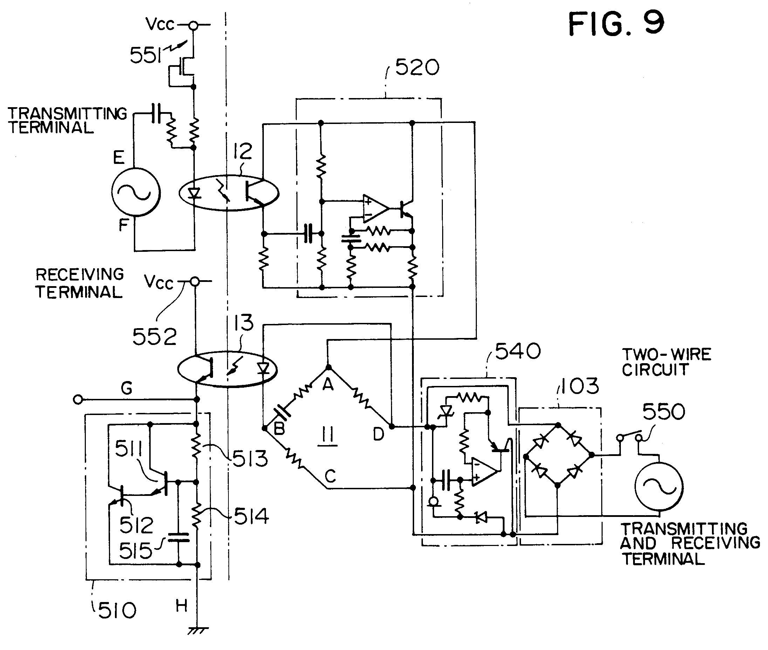

Fig. 9 shows a ninth embodiment of the present invention. The present embodiment solves one of problems arising from variations in photo-coupler products in each of the preceding embodiments. This problem will be explained by referring to the embodiment shown in Fig. 4 as an example. When a photo-coupler is used, a suitable level of a DC bias current is flown to the primary side of the photo-coupler. In this case, a current of the primary side bias current multiplied by a current transmission efficiency of the photo-coupler flows through the secondary side.

In the present invention, there is a case where an electronic circuit is connected to a later stage of the secondary side of the photo-coupler. Consider a case that the circuit of Fig. 4, for example, is used for an NCU (Network Control Unit) of the MODEM. In this circuit, the secondary side 13b of the photo-coupler 13 is received by the load resistor 116 having a resistance value of RL, and this is connected to an electronic circuit at a later stage by a resistance-capacitance coupling (not shown) from the terminal G.

In this circuit, product variations of the photo-coupler can easily affect the operation point of the circuit. This seriously affects a maximum allowable output voltage of the circuit. A maximum allowable output voltage of the circuit will be explained below by carrying out an operation analysis of this circuit.

In the embodiment shown in Fig. 4, a DC potential V of the secondary side output terminal G of the photo-coupler 13 is determined by

$$V = V_{CC} - I_1 \times RL$$

where $V_{CC}$ represents a power source voltage, RL represents a value of the resistor 116 and $I_1$ represents a DC current flowing through the secondary side of the photo-coupler 13. As explained above, the current flowing through the secondary side of the photo-coupler is proportional to the transmission efficiency of the photo-coupler, so that the DC potential of the secondary side output terminal is also proportional to the current transmission efficiency of the photo-coupler.

A maximum allowable output voltage at the output terminal G of the photo-coupler depends on a DC potential V of the photo-coupler output terminal for the following reason. An output voltage of the photo-coupler swings in plus and minus directions around a DC potential V (usually, one half of the power source voltage $V_{CC}$) of the output terminal. When the output voltage swings in the plus direction, the output voltage is restricted by a condition that the output voltage can not exceed the power source voltage $V_{CC}$, and when the output voltage swings in the minus direction the output voltage is restricted by a condition that the output voltage can not drop below the ground potential.

In order to have a maximum allowable voltage to be as high as possible, the photo-coupler is designed such that the DC potential V of the output terminal becomes one half of the power source voltage $V_{CC}$ when the current transmission efficiency of the photo-coupler is maximum. However, when the photo-coupler has been designed as described above, if it is assumed that the current transmission efficiency of the photo-coupler fluctuates around a standard value by ± 6 dB, the DC potential of the output terminal becomes three quarters of the power source voltage $V_{CC}$ when the current transmission efficiency is a standard value (one half of the maximum value). In this case, a maximum allowable swing width in the plus direction becomes $V_{CC} - (3 / 4) V_{CC} = (1 / 4) V_{CC}$, so that the maximum allowable output becomes about one half of the power source voltage $V_{CC}$ for a peak-to-peak value.

As one example, when the power source voltage is 3.3 V and the secondary side DC current is 1 mA, the value of the resistor RL is as follows:

$$3.3 \div (4 \times 1 \times 10^{-3}) = 825 \ \Omega$$

The above-described problem similarly occurs when the load resistor (RL) is connected between the photo-coupler 13 and the ground point GRD and an output is taken out from both ends of the resistor 116.

When the input impedance of the electronic circuit at a later stage is sufficiently high, "current to voltage conversion efficiency" at a coupling point between the photo-coupler output terminal and the later stage electronic circuit is proportional to the value of the RL. Accordingly, if it is possible to set the value of the RL at an effectively high level, it is possible to have high "current to voltage conversion efficiency".

The ninth embodiment shown in Fig. 9 gives one solution to the above problem.

In the present embodiment, a power source circuit 510 according to an electronic circuit is connected as a load on behalf of a resistor connected to the output terminal of the photo-coupler 13 in the above example. This load power source circuit 510 includes transistors 511 and 512, resistors 513 and 514 and a by-pass capacitor 515, and is connected between the secondary side of the photo-coupler 13 and the ground. The load power source circuit 510 operates as a constant voltage circuit when a DC is applied and operates as a constant current circuit when an AC is applied. In Fig. 9, portions corresponding to the same portions in Fig. 1 are designated by the same symbols. 520 designates a circuit driver (an output driver), 540 a semiconductor inductor circuit, 550 a rectifying circuit, and 551 and 552 power sources.

The load power source circuit 510 will be explained. The transistors 511 and 512 function as by-passes of the current which flows through the photo-coupler 13, so that a DC flowing through the photo-coupler 13 and a current flowing through the load power source circuit 510 are equal. A DC potential $V_{OUT}$ at the output terminal G of the photo-coupler is obtained as follows:

$$V_{OUT} = \{(R_{513} + R_{514}) \times V_{BE} \times 2\} / R_{514} \fallingdotseq V_{CC} / 2$$

where $R_{514}$ designates a value of the resistor 514, $R_{513}$ designates a value of the resistor 513 and $V_{BE}$ designates a voltage between the base and the emitter per unit of the transistors 511 and 512.

In the present embodiment, a DC potential at the photo-coupler output terminal G does not change so much according to a flowing current. Therefore, if the DC potential has been set in advance to about one half of the power source voltage $V_{CC}$, it is possible to swing the output voltage to a maximum level of the power source voltage.

The above means that it is possible to take a maximum allowable output voltage of two times as a standard as compared with the above-described circuit in Fig. 4.

In the mean time, the load power source circuit 510 operates as a constant current circuit when an AC is applied. This operation will be explained below. A capacitor 515 is connected to the base terminal of the transistor 511, and the resistors 513 and 514 and the capacitor 515 form a low-pass filter. By the operation of this low-pass filter, only a signal of a frequency lower than the cut-off frequency of the filter is transmitted to the transistors 511 and 514. Accordingly, the circuit does not respond to a signal of a frequency higher than the cut-off frequency of the filter, so that the circuit continues to flow a constant current. Therefore, this circuit operates as a constant current circuit when an AC is applied.

As a result of the above operation, the impedance of this circuit becomes a serial value of the resistors 513 and 514. In other words, the value of the load resistor in an AC flow observed from the photo-coupler 13 is a serial value of the resistors 513 and 514. The serial value of the resistors 513 and 514 can be easily set to several tens $K\Omega$.

As explained above, the "current to voltage conversion efficiency" is proportional to the value of the resistors at this portion. In the present embodiment, the value of the resistor can be easily set to a value of several times as compared with the above-explained example relating to Fig. 4. Therefore, it is possible to increase the efficiency by this amount.

Although the load power source circuit 510 has been provided between the secondary side of the photo-coupler 13 and the ground in the above embodiment, it is needless to mention that the similar load power circuit 510 can also be provided between the secondary side of the photo-coupler 13 and the power source $V_{CC}$, in stead of the above position. It is also possible to provide the similar load power source circuit as a secondary side load of the transmitting photo-coupler 12.

The present embodiment can also have an effect similar to the effect of the preceding embodiments.

Tenth embodiment

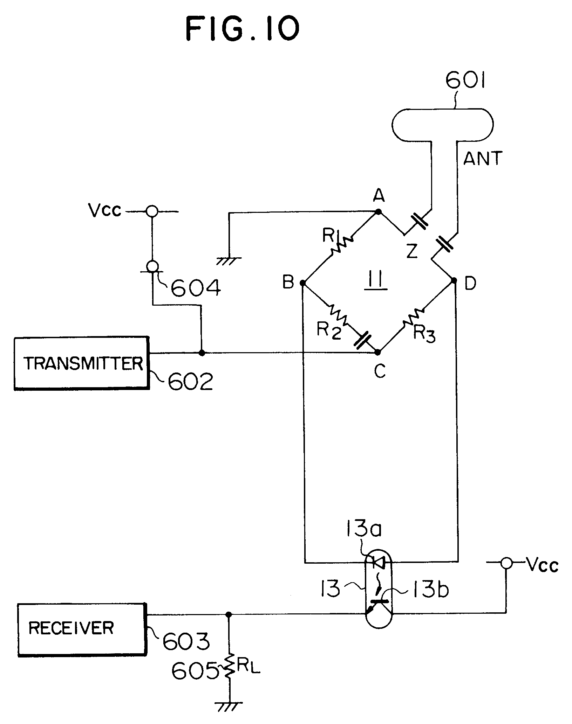

Fig. 10 shows a tenth embodiment of the present invention. In the present embodiment, the present invention has been applied to a radio transmitter and receiver. The present embodiment is used when one antenna of a radio transmitter and receiver is commonly used for transmission and receiving.

In Fig. 10, 601 designates an antenna, 602 an FM transmitter, 603 an FM receiver, 604 a constant current diode, and 605 a load resistor (RL). Portions corresponding to the same portions in Fig. 1 are designated by the same symbols. The antenna 601 is commonly used for transmitting and receiving of signals, and forms the balancing bridge 11 of four terminals including the impedance Z and the remaining impedance devices $R_1$ to $R_3$. As is the same with the other embodiments, the receiving photo-coupler 13 is connected to the bridge 11 and a transmitting signal is separated from a receiving signal.

When the present embodiment is used for a radio communication at a relatively close distance, it is possible to set a signal level of a receiving signal to be higher than a signal level of a transmitting signal leaking to a receiving circuit due to unbalance of the bridge.

A receiver of the FM system is characterized in that it selectively receives a signal level of a wave to be as high as possible when waves of the same frequency have reached the receiver. This is called a capture effect. When the present embodiment is used by utilizing the capture effect, it becomes possible to carry out a bidirectional communication by using the same frequency for the transmitting frequency and the receiving frequency.

The present embodiment can also be applied to the case where a transmitting carrier frequency is different from a receiving carrier frequency.

According to the present embodiment, the photo-coupler is required to be provided either between the bridge and the receiver or between the bridge and the transmitter. With this arrangement, minus side of the transmitting terminals and the receiving terminals respectively can be grounded together.

Eleventh embodiment

Fig. 11 is a block diagram for showing a schematic configuration of the MODEM front end including the four-wire to two-wire conversion unit and the NCU of the MODEM to which the embodiment of Fig. 9 has been applied. Portions corresponding to the same portions in Fig. 9 are designated by the same symbols. In the present embodiment, a photo-coupler variation compensation circuit 560, a temperature compensation circuit 561, a ring circuit 562 and a surge absorber 563 are added to the embodiment of Fig. 9.

Twelfth embodiment

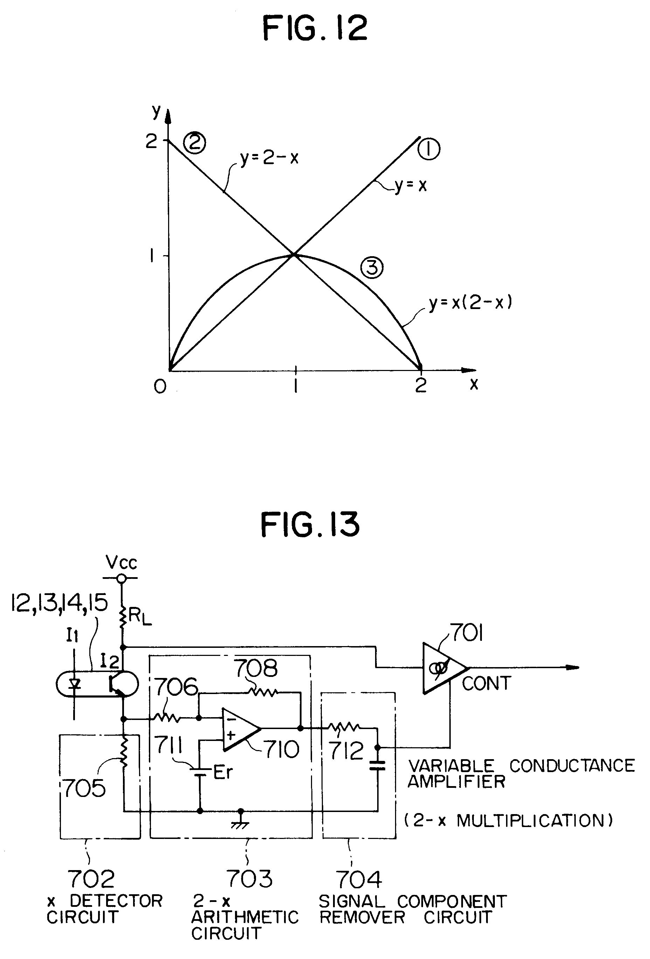

Figs. 12 and 13 are diagrams for explaining a twelfth embodiment of the present invention, Fig.13 being a configuration diagram and Fig. 12 being an operation explanation diagram of the embodiment respectively. According to the present embodiment, in a signal transmission circuit (a signal sending circuit) for sending a signal to a circuit by using a photo-coupler, even if characteristics of a current transmission rate of the photo-coupler fluctuate around a standard value, this variation can be compensated and an optimum output can always be obtained. The present embodiment can be used for the photo-coupler variation compensation circuit 560 in the embodiment shown in Fig. 11, for example. The circuit of Fig. 13 is isolated from the power supply of the data terminal equipment, then, in Fig. 1, the unit 560 is isolated from the source 551.

In general, a maximum transmission level has been decided in advance when a signal is transmitted to a telephone circuit by using a MODEM. For a current transmission rate of a photo-coupler, a maximum value and a minimum value are prescribed around a standard value. If a maximum transmission level has been decided in advance, a transmission circuit has to be designed so that a transmission level does not exceed the predetermined level by assuming a maximum current transmission rate of the photo-coupler.

However, in the case of photo-couplers provided by a mass-production, even those photo-couplers that have been severely selected have a standard value of the current transmission rate that is lower than a maximum value by about 3 to 5 dB. Therefore, if a circuit has been designed by assuming a maximum current transmission rate, a photo-coupler of a standard value, when used without any adjustment, has a transmission power lower than a limit value of the maximum transmission level by about 3 to 5 dB.

A photo-coupler is a kind of semiconductors, and the distribution of current transmission rate of a group of photo-couplers in the same production lot becomes such that the number of photo-couplers that have a certain standard value (a median) is the largest and the number of photo-couplers that have a value near the maximum value or near the minimum value is small, as is known in various distribution curves such as,

EP 0 626 766 A2

for example, a normal distribution curve. Accordingly, there has been a problem that although it is desired to have a transmission power to be as high as possible within a limit range value, the transmission power actually obtained becomes low when standard photo-couplers of the largest number group are used.

In Fig. 12, the horizontal axis x shows a distribution of current transmission rate of photo-couplers, in which a standard value is shown as 1 by normalizing the distribution. In other words, as explained above, when photo-couplers which belong to a certain group has current transmission rates that are distributed within a constant range and when this distribution is not random but forms a shape of a mountain based on statistical characteristics, the current transmission rate at the peak of this mountain-shaped distribution (the current transmission rate of the photo-couplers of which the sample number is the largest) is shown as a standard value 1 by normalizing this distribution. When the distribution is random, the median of this distribution is shown as a standard value 1 by normalizing the distribution. In Fig. 12, the vertical axis y shows output values of the signal transmission circuits (signal sending circuits) that use photo-couplers.

In Fig. 13, the signal transmission circuit (which corresponds to the photo-coupler variation compensation circuit 560 in Fig. 11 as described above) includes a voltage control type variable gain amplifier (a multiplier circuit) 701, a current transmission rate x detector circuit 702, a 2-x arithmetic circuit 703 and a signal component removing circuit 704. The detector circuit 702 has a resistor 705. The arithmetic circuit 703 has resistors 706 and 708, a reference power source (Er) 711 and a differential amplifier 710. The signal component removing circuit 704 has a resistor 709 and a capacitor 712. 12 designates a photo-coupler at the transmitter terminal side. As explained above, the current transmission rate x is a normalized value of the secondary current $I_2$ / primary current $I_1$ of a photo-coupler.

Since the secondary output of the photo-coupler is proportional to the current transmitting rate (CTR) x when a constant input is applied to the primary side of the photo-coupler, the output y of the amplifier 701 at a non-adjusted time (a non-controlled time) is proportional to the current transmission rate of the photo-coupler, and is given by the following, as shown by a straight line (1) in Fig. 12:

$$y = x \quad (1)$$

(The outputs are normalized to show such that y = 1 when x = 1.) On the other hand, when k is a real number, a control input to the amplifier 701 (that is an output of the signal component removing circuit 704) is given by the following, as shown by a straight line (2) in Fig. 12:

$$y = k (2 - x) \quad (2)$$

(In Fig. 12, the control outputs are normalized to show such that k = 1.) Accordingly, the output of the amplifier 701 at a control time is given by the following by multiplying the expression (1) by the expression (2), as shown by a quadratic curve (3) in Fig. 12:

$$y = k \{x (2 - x)\}$$
$$= k \{1 - (x - 1)^2\} \quad (3)$$

As is clear from the comparison of the straight line (1) with the quadratic curve (2), if the amplifier 701 has been designed such that the maximum allowable output (y = 1) can be obtained when the current transmission rate is a standard value (x = 1) when the amplifier 701 is non-controlled (the straight line (1)), the output of the amplifier 701 exceeds the maximum allowable output when the current transmission rate has deviated from the standard value to the right side of the diagram (x > 1). Therefore, when the present embodiment is not applied, the output value of the amplifier 701 at the standard current transmission rate (x = 1) has been set to a value lower than the maximum allowable output by about 3 dB to 5 dB, as explained above.

On the other hand, in the present embodiment, as is clear from the quadratic curve (3), the value of y becomes a maximum when x = 1 and, therefore, the value of y will never exceed the value when x = 1 even if the current transmission rate of the photo-coupler has deviated from the standard value (x = 1) to any direction. Accordingly, it is possible to design the amplifier 701 such that almost the maximum allowable output (a maximum output) can be obtained when the current transmission rate x of the photo-coupler is the standard value 1. As a result, it is possible to obtain an output of always satisfactory efficiency by using a photo-coupler having various variation.

13

The present embodiment can be applied not only to the transmitter side photo-coupler 12 but also to the receiver side photo-couplers 13 to 15.

Thirteenth embodiment

As explained in the above, Fig. 14 shows an embodiment of the communication unit using a card type MODEM to which the present invention has been applied. The MODEM 802 of this embodiment can be structured in a very thin type (A = 85.6 mm, B = 54 mm, C = 5 mm).

Fourteenth embodiment

Fig. 16 shows a block diagram of a structure of a MODEM connected between a personal computer and a public circuit switching network. This MODEM includes a terminal interface 1, a controller 2, a digital signal processing unit 3, and a front end unit 4. The front end unit 4 is structured by a four-wire to two-wire hybrid circuit 5 and a network control unit 6. The hybrid circuit 5 explained in the above embodiments is used in the front end unit 4.

Others

In the above embodiments 1 to 10, description has been made of the case where only photo-couplers are used as isolation interface devices. However, it is needless to mention that not only the photo-couplers but optically coupled devices can also be used for the same purpose. Further, in addition to the optically coupled devices, isolation interface devices such as Hall devices and semiconductor relays can also be used.

In the above embodiments, it is also possible to use a wire impedance instead of one of the resistors of the balancing bridge circuit.

As explained above, according to the present invention, a balancing bridge circuit is provided between the four-wire circuit and the two-wire circuit, and either an isolation interface device such as a compact photo-coupler is provided between the terminals of the circuits, or a part of the structural element of the balancing bridge circuit provided between the four-wire circuit and the two-wire circuit has been substituted by an isolation interface device such as a compact photo-coupler. Therefore, it is possible to use the transmitting terminals and receiving terminals of the four-wire circuit by grounding them together, without short-circuiting the sides of the balancing bridge circuit. Further, it is possible to achieve a four-wire to two-wire conversion of the channel in a thin hybrid circuit by using a small number of compact circuit parts, without using a large transformer.

Further, it is also possible to prevent a leakage of common-mode noise of a wide frequency band reaching the two-wire circuit to the receiving terminal of the four-wire circuit, with an effect that the S/N ratio can be improved.

## Claims

1. A MODEM comprising:

   a modulation/demodulation device (2, 3) having primary and secondary terminals and modulating and demodulating signals received therethrough,

   a balancing bridge circuit provided between said secondary terminals (E, F, G, H) of said modulation/demodulation device and terminals (J, K) of a two-wire circuit respectively,

   transmitting optically coupled device, a secondary side of said transmitting optically coupled device of said four-wire circuit being between balancing points at one side of said bridge circuit (11), and

   a receiving optically coupled device having a primary side of said modulation/demodulation device and connected between balancing points at the other side of said bridge circuit (11), terminals of said two-wire circuit being connected between any adjacent connection points of said bridge circuit (11), and a secondary side of said receiving optically coupled device being connected to said modulation/demodulation device.

2. A MODEM comprising:

   a modulation/demodulation device (2, 3) having primary and secondary terminals and modulating and demodulating signals received therethrough,

   a balancing bridge circuit (11) including two series-connected resistors or impedances and two

EP 0 626 766 A2

series-connected isolation interface devices (14, 15), provided between said secondary terminals (E, F, G, H) of said modulation/demodulation device and terminals (J, K) of a two-wire circuit respectively, said two isolation interface devices (14, 15) being individually connected to two receiving terminals (G, H) of said modulation/demodulation device, and another isolation interface device (12) being provided between said bridge circuit (11) and transmitting terminals (E, F) of said modulation/demodulation device.

3. A MODEM comprising:

a modulation/demodulation device (2, 3) having primary and secondary terminals in a form of a four-wire circuit and modulating demodulating signals received therethrough,

a balancing bridge circuit (11) provided between said secondary terminals (E, F, G, H) of said modulation/demodulation and terminals (J, K) of a two-wire circuit respectively,

two receiving optically coupled devices, adjacent two sides of said bridge circuit (11) being structured by series-connected resistors or impedances, remaining two adjacent sides of said bridge circuit (11) being structured by primary sides of series-connected said two receiving optically coupled devices,

a transmitting optically coupled device having a secondary side connected between a connection point of two resistors of said bridge circuit (11) and a connection point of said two receiving optically coupled devices, terminals of said two-wire circuit being connected between desired adjacent connection points of said bridge circuit, a primary side of said transmitting optically coupled device (12) being connected to transmitting terminals (E, F) of said modulation/demodulation device, and a secondary side of said receiving optically coupled device (13) being connected to receiving terminals (G, H) of said modulation/demodulation.

4. A MODEM according to Claim 3, wherein secondary sides of said two optically coupled devices are connected in series and a receiving output is obtained from one of said terminals and from a connection point between said secondary sides.

5. A MODEM according to Claim 3, wherein outputs obtained from said secondary sides of said two optically coupled devices are differentially coupled to obtain a receiving output.

6. A MODEM comprising:

a modulation/demodulation device (2, 3) for modulating and demodulating a signal,

a hybrid circuit (4) connected with said modulation/demodulation device for making a four-wire to two-wire conversion, and

a housing enclosing said modulation/demodulation device and said hybrid circuit and having thickness not larger than 5 mm.

7. A hybrid circuit for carrying out a four-wire to two-wire conversion of a channel, comprising:

a balancing bridge circuit provided between terminals (E, F, G, H) of a four-wire circuit and terminals (J, K) of a two-wire circuit respectively,

transmitting optically coupled device, a secondary side of said transmitting optically coupled device of said four-wire circuit being between balancing points at one side of said bridge circuit (11),

a receiving optically coupled device having a primary side of said four-wire circuit and connected between balancing points at the other side of said bridge circuit (11), terminals of said two-wire circuit being connected between any adjacent connection points of said bridge circuit (11), and a secondary side of said receiving optically coupled device being connected to said four-wire circuit.

8. A hybrid circuit for carrying out a four-wire to two-wire conversion of a channel, comprising:

a balancing bridge circuit (11) including two series-connected resistors or impedances and two series-connected isolation interface devices (14, 15) provided between first terminals (E, F, G, H) of a four-wire circuit and second terminals (J, K) of a two-wire circuit respectively, said two isolation interface devices (14, 15) being individually connected to two receiving terminals (G, H) of said four-wire circuit, and another isolation interface device (12) being provided between said bridge circuit (11) and transmitting terminals (E, F) of said four-wire circuit.

9. A hybrid circuit for carrying out a four-wire to two-wire conversion of a channel, wherein a balancing bridge circuit (11) is provided between terminals (E, F, G, H) of a four-wire circuit and terminals (J, K)

15

EP 0 626 766 A2

of a two-wire circuit respectively, adjacent two sides of said bridge circuit (11) are structured by series-connected resistors or impedances, remaining two adjacent sides of said bridge circuit (11) are structured by primary sides of series-connected two receiving optically coupled devices, a secondary side of a transmitting optically coupled device is connected between a connection point of two resistors of said bridge circuit (11) and a connection point of said two receiving optically coupled devices, terminals of said two-wire circuit are connected between desired adjacent connection points of said bridge circuit, a primary side of said transmitting optically coupled device (12) is connected to transmitting terminals (E, F) of said four-wire circuit, and a secondary side of said receiving optically coupled device (13) is connected to receiving terminals (G, H) of said four-wire circuit.

10. A hybrid circuit for carrying out a four-wire to two-wire conversion of a channel according to Claim 9, wherein secondary sides of said two optically coupled devices are connected in series and a receiving output is obtained from one of said terminals and from a connection point between said secondary sides.

11. A hybrid circuit carrying out a four-wire to two-wire conversion of a channel according to Claim 9, wherein outputs obtained from said secondary sides of said two optically coupled devices are differentially coupled to obtain a receiving output.

12. A hybrid circuit for carrying out a four-wire to two-wire conversion of a channel, wherein a balancing bridge circuit (11) is provided between terminals (E, F, G, H) of a four-wire circuit and terminals (J, K) of a two-wire circuit respectively, a secondary side of a transmitting optically coupled device of said four-wire circuit is connected between balancing points at one side of said bridge circuit (11), primary sides of a pair of receiving optically coupled devices of a push-pull connection are connected between balancing points at the other side of said bridge circuit (11), terminals of said two-wire circuit are connected between desired adjacent connection points of said bridge circuit (11), a primary side of said transmitting optically coupled device is connected to transmitting terminals of said four-wire circuit, and a secondary side of said receiving optically coupled device is connected to receiving terminals of said four-wire circuit.

13. A hybrid circuit for carrying out a four-wire to two-wire conversion of a channel according to one of Claims 7, 9 and 12, wherein at least one of said receiving optically coupled devices and said transmitting optically coupled devices is connected at its secondary side with a load circuit which operates as a constant voltage circuit when a DC flows and which also works as a constant current circuit when an AC flows.

14. A hybrid circuit for carrying out a four-wire to two-wire conversion of a channel according to Claim 12, wherein one side of said balancing bridge circuit is structured by said two-wire circuit.

15. A hybrid circuit for carrying out a four-wire to two-wire conversion of a channel according to Claim 7 or Claim 8, wherein said isolation interface device is an optically coupled device.

16. A hybrid circuit for carrying out a four-wire to two-wire conversion of a channel according to Claim 7 or Claim 8, wherein said isolation interface device is a current detector using a Hall device.

17. A hybrid circuit for carrying out a four-wire to two-wire conversion of a channel according to Claim 7 or Claim 8, wherein said isolation interface device is an isolation amplifier including a transistor and a transformer for supplying a base current to said transistor.

18. A data communication unit equipped with a transmitter, a receiver and a transmitting and receiving antenna, comprising:

a balancing bridge circuit provided of which three sides are structured by resistors or impedance devices and the remaining one side is structured by said transmitting and receiving antenna, said transmitter being coupled between balancing points at one side of said bridge circuit and said receiver being coupled between balancing points at the other side of said bridge circuit, and

an optically coupled device provided in said coupling portion between said bridge circuit and said transmitter or in said coupling portion between said bridge circuit and said receiver.

16

**19.** A signal transmission circuit, comprising:

a plurality of photo-coupler means (12, 13, 14, 15) having values of current transmission rate of around a standard value,

a valuable gain amplifier (701) for amplifying outputs of said photo-coupler means,

a measuring circuit (702) for measuring current transmission rate for said plurality of photo-coupler means, and

a gain control circuit (704, 705) for controlling a gain of said valuable gain amplifier, wherein said gain control circuit controls gain to obtain largest output from said valuable gain amplifier (701) when a value measured with said measuring circuit (702) is said standard value.

**20.** A signal transmission circuit according to Claim 19, wherein a value x of said current transmission rate from said photo-coupler means is normalized in expression of a standard value one where $0 \leq x \leq 2$ and wherein said gain control circuit (704, 705) controls to multiply gain of said valuable gain amplifier (701) for amplification at said output of said photo-coupler means with $k(2 - x)$ where k is a real number.

**21.** A signal transmission circuit according to Claim 19 or 20, wherein said output of said valuable gain amplifier (701) at a time when said value measured with said measuring circuit (702) is said standard value does not exceed an allowable maximum level for a signal transmission line.

**22.** A signal transmission circuit according to Claim 19, 20 or 21, wherein said output of said valuable gain amplifier (701) is $k(2 - x)$ and said valuable gain amplifier (701) comprises a multiplier (701) for multiplying the output of said valuable gain amplifier (701) and the output of gain control circuit (704, 705).

# FIG.1

FOUR-WIRE CIRCUIT

TRANSMITTING TERMINAL

E

F

12a  12

TWO-WIRE CIRCUIT

11

A

R1      R4

B           D

R2      R3

C

J

K

Z

12b

TRANSMITTING AND RECEIVING TERMINAL

13

G

RECEIVING TERMINAL

H   13b

13a

# FIG. 2

FOUR-WIRE CIRCUIT

TRANSMITTING TERMINAL

TWO-WIRE CIRCUIT

TRANSMITTING AND RECEIVING TERMINAL

RECEIVING TERMINAL

# FIG.3

FOUR-WIRE
CIRCUIT

TRANSMITTING
TERMINAL

TWO-WIRE
CIRCUIT

TRANSMITTING
AND RECEIVING
TERMINAL

16 DIFFERENTIAL

RECEIVING
TERMINAL

# FIG.4

# FIG.5

TWO-WIRE CIRCUIT

TRANSMITTING TERMINAL

RECEIVING TERMINAL

FOUR-WIRE CIRCUIT

Vcc

# FIG.6

# FIG.7

# FIG. 8A

FOUR-WIRE CIRCUIT

TRANSMITTING TERMINAL

TWO-WIRE CIRCUIT

TRANSMITTING/ RECEIVING TERMINAL

RECEIVING TERMINAL

# FIG. 8B

CIRCUIT

FIG. 9

# FIG. 10

# FIG. 11

TXA

PHOTO-COUPLER POWER SOURCE 551

PHOTO-COUPLER 12

PHOTO-COUPLER VARIATION COMPENSATION UNIT 560

TEMPERATURE COMPENSATION UNIT 561

CIRCUIT DRIVER 520

RXA

PHOTO-COUPLER POWER SOURCE 552

PHOTO-COUPLER 13

FOUR-TERMINAL BRIDGE 11

SEMICONDUCTOR INDUCTOR 540

RECTIFIER CIRCUIT 103

RELAY 550

RING CIRCUIT 562

SURGE ABSORBER 563

CIRCUIT

EP 0 626 766 A2

# FIG. 12

# FIG. 13

VARIABLE CONDUCTANCE AMPLIFIER

(2-x MULTIPLICATION)

702 x DETECTOR CIRCUIT

703 2-x ARITHMETIC CIRCUIT

704 SIGNAL COMPONENT REMOVER CIRCUIT

# FIG. 14

CARD SLOT

802

803

CARD MODEM
JEIDA TYPE2

TO THE
TELEPHONE
CIRCUIT

801

C

B

A

# FIG. 15

FOUR-WIRE
CIRCUIT

TRANSMITTING
TERMINAL

TWO-WIRE
CIRCUIT

E

A

B

D

J

F

C

K

TRANSMITTING
AND RECEIVING
TERMINAL

G

RECEIVING
TERMINAL

H

# FIG. 16

PERSONAL COMPUTER

TRANS-MITTING TERMINAL

RECEIVING TERMINAL

TERMINAL INTERFACE — 1

CONTROLLER — 2

DIGITAL SIGNAL PROCESSING UNIT — 3

TRANS-MITTING TERMINAL

RECEIVING TERMINL

HYBRID CIRCUIT — 5

NCU NETWORK CONTROL UNIT — 6

CIRCUIT

4 FRONT END UNIT

# FIG. 17

5

TRANSMITTING TERMINAL

RECEIVING TERMINAL

L

CIRCUIT